# EUROPEAN PATENT APPLICATION

(11) **EP 1 939 065 A2**
(43) Date of publication of application: **02.07.2008**
(21) Application number: 07024852.1
(22) Date of filing: 20.12.2007
(51) Int. Cl.: B62D 5/00

(54) **Vehicle steering system**

(30) Priority: 25.12.2006 JP 2006346883
(71) Applicant: FUJI KIKO Co., Ltd., Kosai-shi, Shizuoka 431-0431 (JP)
(72) Inventor: Osanai, Akira, Kosai-shi Shizuoka 431-0431 (JP); Itou, Tadao, Kosai-shi Shizuoka 431-0431 (JP); Ikegaya, Isao, Kosai-shi Shizuoka 431-0431 (JP)
(74) Representative: Grünecker, Kinkeldey, Stockmair & Schwanhäusser Anwaltssozietät

(57) **Abstract**

In a steer-by-wire vehicle steering system configured to execute a direct-coupled mode via a clutch (8) for failsafe, the clutch (8) includes a first member fixed to a clutch output shaft, a second member defining a cylindrical outer peripheral wall surface in rolling-contact with a cylindrical inner peripheral wall surface of the first member, and a pair of spring-loaded wedges movably interposed between the two members. Also provided is a lock pin, which squeezes into and retreats out of a space defined between the two opposing first wedge ends to ensure a lock state, namely, the engaged state with the jammed wedges and an unlock state, namely, the disengaged state with the unjammed wedges. A steering-movement transmission member, fixed to a clutch input shaft, is interleaved between the circumferentially-spaced second wedge ends to keep the two opposing first wedge ends in close proximity to each other.

## Description

### TECHNICAL FIELD

The present invention relates to a vehicle steering system, and specifically to a steer-by-wire (SBW) vehicle steering system in which a driver-applied steering movement is converted into an electric information signal under a condition where a steering mechanism (a rotary-to-linear motion converter) and a steering wheel are mechanically uncoupled from each other and then the steering mechanism is operated in response to the electric information signal for steering.

### BACKGROUND ART

In recent years, there have been proposed and developed various automotive SBW vehicle steering systems in which a steering reaction torque (or a steering reaction force) applied to a steering wheel and a steer angle at steered road wheels can be arbitrarily determined. One such SBW vehicle steering system has been disclosed in Japanese Patent Provisional Publication No. 2004-237785 (hereinafter is referred to as "JP2004-237785"), corresponding to European Patent Application No. EP 1 445 171 A2. Fig. 8 shows the SBW vehicle steering system disclosed in JP2004-237785. As seen in Fig. 8, the SBW vehicle steering system 100 is comprised of a steering wheel 101 operated by the driver, a steering-wheel angle sensor 102, a steered-road-wheel angle converter (in other words, a rotary-to-linear motion converter) 103, a steering motor 103a, a steer-by-wire (SBW) controller 104, an electromagnetic clutch mechanism 105 by which steering wheel 101 and steered-road-wheel angle converter 103 are mechanically coupled to or uncoupled from each other, a battery 110, and a vehicle speed sensor 142. Steering-wheel angle sensor 102 detects a steering movement, that is, an amount of rotation and a rotation direction of steering wheel 101 rotated by the driver, and generates an electric information signal indicative of the steering movement. Vehicle speed sensor 142 tells SBW controller 104 at what speed the vehicle is moving, and generates a vehicle speed sensor signal. SBW controller 104 controls operation of steering motor 103a responsively to at least the electric information signal from steering-wheel angle sensor 102 (exactly, input information from vehicle speed sensor 142 as well as steering-wheel angle sensor 102). Steered-road-wheel angle converter (rotary-to-linear motion converter) 103 includes a rack-and-pinion mechanism via which rotary motion of steering motor 103a is converted into linear motion of a steering linkage mechanically linked to steered road wheels, thereby varying a steered-road-wheel angle (a steer angle at steered road wheels).

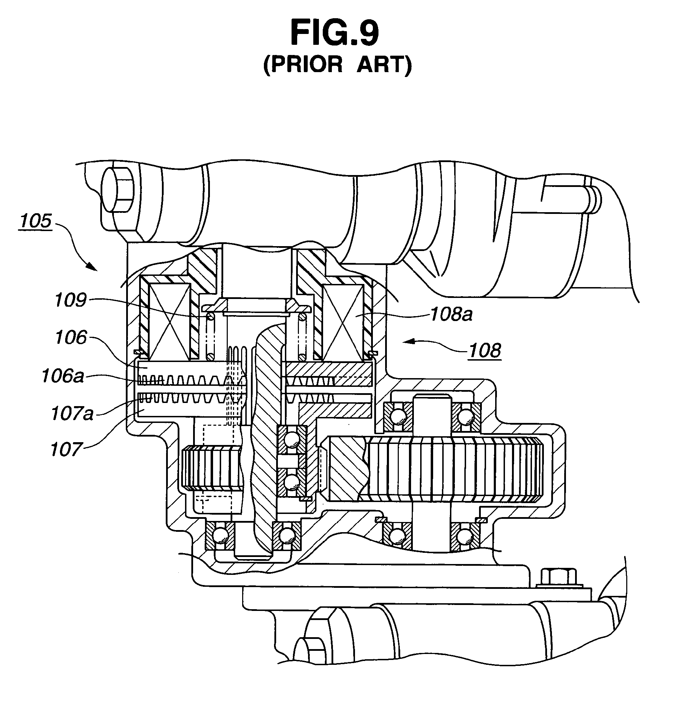

Fig. 9 shows the detailed structure of electromagnetic clutch mechanism 105. As seen in Fig. 9, clutch mechanism 105 is comprised of primary and secondary clutch plates 106-107, an electromagnetic clutch solenoid 108, and a spring 109. Primary clutch plate 106 rotates in synchronism with rotation of steering wheel 101. Primary and secondary clutch plates 106-107 are located to oppose each other. Secondary clutch plate 107 is fixedly connected to the input shaft of steered-road-wheel angle converter 103. Spring 109 permanently biases primary clutch plate 106 toward secondary clutch plate 107. With solenoid 108 energized, an attraction force is produced to move primary clutch plate 106 apart from secondary clutch plate 107 against the spring bias of spring 109. Radial clutch grooves 106a and 107a, configured to mesh with each other, are formed in the two confronting surfaces of primary and secondary clutch plates 106-107 opposing each other.

During an SBW operating mode, an electromagnetic coil 108a of solenoid 108 is energized by SBW controller 104. Thus, electromagnetic clutch mechanism 105 is kept at its disengaged state in which steering wheel 101 (serving as an operating member or a steering input section) and steered-road-wheel angle converter 103 (serving as a steering output section) are mechanically uncoupled from each other. When steering wheel 101 is turned by the driver during the SBW operating mode, SBW controller 104 drives steering motor 103a responsively to at least the information signal from steering-wheel angle sensor 102, and then rotary motion of steering motor 103a is motion-converted into linear motion by means of steered-road-wheel angle converter 103 for steering.

Conversely when SBW controller 104 determines that an SBW system failure, such as a failure in steering motor 103a, occurs, electromagnetic coil 108a of solenoid 108 is de-energized by SBW controller 104. Thus, clutch mechanism 105 is shifted to the engaged state in which steering wheel 101 and steered-road-wheel angle converter 103 are directly coupled to each other via the clutch mechanism engaged. During the direct-coupled mode (or the fail-safe mode) executed in the presence of an SBW system failure, SBW controller 104 inhibits the SBW operating mode that the operation of steering motor 103a is controlled responsively to at least the steering-wheel angle sensor signal. Thus, the operating force (steering movement), applied to steering wheel 101 by the driver, is transferred through clutch mechanism 105 directly to steered-road-wheel angle converter 103, and thus input rotation transferred from steering wheel 101 through clutch mechanism 105 to steered-road-wheel angle converter 103 is converted into linear motion by means of steered-road-wheel angle converter 103, for steering.

As discussed above, when a system failure in the SBW vehicle steering system 100 occurs, clutch mechanism 105 can be shifted to its engaged state for switching from the SBW operating mode to the direct-coupled mode, thus ensuring manual steering even in the presence of the SBW system failure.

### SUMMARY OF THE INVENTION

In the automotive SBW vehicle steering system as disclosed in JP2004-237785, the radial clutch grooves are formed in the two confronting surfaces of the primary and secondary clutch plates opposing each other. The grooved clutch plate structure is suitable to large steering torque transmission. However, suppose that the electromagnetic clutch mechanism is switching to the engaged state under a condition where the primary clutch plate is rotating in synchronization with rotation of the steering wheel while the secondary clutch plate remains stationary and thus there is a relative-rotation difference between the primary and secondary clutch plates. In such a situation (in the presence of the relative-rotation difference between the primary and secondary clutch plates), there is an increased tendency that the radial clutch grooves of the primary and secondary clutch plates cannot be rapidly brought into mesh. That is, in case of the grooved clutch plate structure, it is difficult to switch the electromagnetic clutch mechanism momentarily to the engaged state in the presence of a relative-rotation difference between the primary and secondary clutch plates. Suppose that, in order to switch the electromagnetic clutch mechanism momentarily to the engaged state, the primary and secondary clutch plates do not have any radial clutch grooves. Such an ungrooved clutch plate structure is unsuitable to large steering torque transmission.

It is, therefore, in view of the previously-described disadvantages of the prior art, an object of the invention to provide a vehicle steering system, configured to execute a steer-by-wire (SBW) operating mode for SBW control and a direct-coupled mode during which steering input and output sections are mechanically coupled to each other via a clutch in the presence of an SBW system failure, and to reconcile (i) momentary switching of the clutch to its engaged state as soon as the SBW system failure occurs and (ii) large steering torque transmission via the clutch engaged.

In order to accomplish the aforementioned and other objects of the present invention, a vehicle steering system configured to execute a steer-by-wire (SBW) operating mode for SBW control and to execute a direct-coupled mode for failsafe, comprises a clutch device configured to mechanically couple and uncouple an operating member to and from an input shaft of a steering mechanism, the clutch device comprising a first member fixed to a first end face of two opposing end faces of a clutch input shaft linked to the operating member and a clutch output shaft linked to the input shaft of the steering mechanism, the first member defining a cylindrical inner peripheral wall surface, a second member defining a cylindrical outer peripheral wall surface in rolling contact with the inner peripheral wall surface, a pair of spring-loaded wedges movably mounted in an annular space defined between a hub portion formed integral with the first member and a central circular hole formed in the second member, each of the wedges having a first end and a second end, the first ends of the wedges located to circumferentially oppose each other, and the second ends of the wedges located to be circumferentially spaced apart from each other, a steering-movement transmission member provided on a second end face of the two opposing end faces of the clutch input shaft and the clutch output shaft, and interleaved between the second wedge ends to keep the first wedge ends in close proximity to each other via the steering-movement transmission member, and a lock pin configured to squeeze into and retreat out of a clearance space defined between the two opposing first wedge ends to ensure a lock state in which the clutch device is kept in an engaged state by a wedging action of the wedges jammed between the first and second members and an unlock state in which the clutch device is kept in a disengaged state with the wedges unjammed between the first and second members.

According to another aspect of the invention, a vehicle steering system comprises a sensor provided to detect at least a steering movement of an operating member, a steering mechanism comprising a steering actuator configured to produce a rotary motion whose direction and amount are determined based on the detected steering movement, and a motion converter configured to convert the rotary motion produced by the steering actuator and transferred to an input shaft of the steering mechanism into a linear motion of an output shaft of the steering mechanism for steering road wheels, and a clutch device configured to mechanically couple and uncouple the operating member to and from the input shaft of the steering mechanism, the clutch device comprising a first member fixed to a first end face of two opposing end faces of a clutch input shaft linked to the operating member and a clutch output shaft linked to the input shaft of the steering mechanism, the first member defining an inner peripheral wall surface, a second member defining an outer peripheral wall surface in rolling contact with the inner peripheral wall surface, a circumference of the outer peripheral wall surface having a diameter less than a diameter of a circumference of the inner peripheral wall surface, a pair of wedges movably mounted in an annular space defined between a hub portion formed integral with the first member and a central circular hole formed in the second member, each of the wedges having a first end and a second end, the first ends of the wedges located to circumferentially oppose each other, and the second ends of the wedges located to be circumferentially spaced apart from each other, a spring configured to force the first wedge ends to move apart from each other, a steering-movement transmission member provided on a second end face of the two opposing end faces of the clutch input shaft and the clutch output shaft, and interleaved between the second wedge ends within the annular space to keep the first wedge ends in close proximity to each other via the steering-movement transmission member, and a lock pin configured to move apart from the second end face for squeezing the lock pin between the two opposing first wedge ends and to move toward the second end face for retreating the lock pin out of a clearance space defined between the two opposing first wedge ends, wherein, under an unlock state in which the lock pin retreats out of the clearance space defined between the two opposing first wedge ends, the clutch device is kept in a disengaged state in which the wedges are permitted to freely slide within the annular space without wedging action between the first and second members to prevent steering torque transmission via the steering-movement transmission member and the wedges, and wherein, under a lock state in which the lock pin squeezes between the two opposing first wedge ends, the clutch device is kept in an engaged state in which the first and second members are coupled to each other by a wedging action of the wedges jammed between the first and second members to permit steering torque transmission via the steering-movement transmission member and the wedges.

The other objects and features of this invention will become understood from the following description with reference to the accompanying drawings.

### BRIEF DESCRIPTION OF THE DRAWINGS

Fig. 1 is a system diagram illustrating an embodiment of a vehicle steering system.

Fig. 2 is a longitudinal cross-sectional view illustrating a disengaged state of an electromagnetic clutch incorporated in the vehicle steering system of the embodiment.

Fig. 3 is a longitudinal cross-sectional view illustrating an engaged state of the electromagnetic clutch incorporated in the vehicle steering system of the embodiment.

Fig. 4 is a perspective view showing the electromagnetic clutch shown in Figs. 2-3.

Fig. 5 is a view, partially in lateral cross section, of a coupling/uncoupling mechanism of the electromagnetic clutch, taken in the direction of the arrows substantially along the line V-V in Fig. 3.

Fig. 6A is an elevation view illustrating the unlock state of the coupling/uncoupling mechanism of the electromagnetic clutch of Fig. 5, while Fig. 6B is a bottom view illustrating the unlock state of the same coupling/uncoupling mechanism.

Fig. 7A is an elevation view illustrating the lock state of the coupling/uncoupling mechanism of the electromagnetic clutch of Fig. 5, while Fig. 7B is a bottom view illustrating the lock state of the same coupling/uncoupling mechanism.

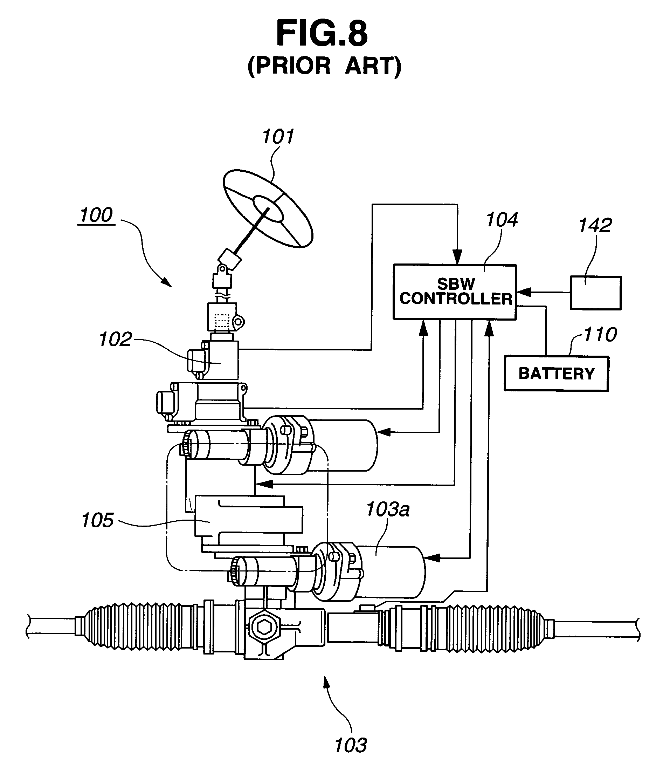

Fig. 8 is a system diagram illustrating the prior-art SBW vehicle steering system.

Fig. 9 is a cross-sectional view illustrating an electromagnetic clutch mechanism incorporated in the prior-art SBW vehicle steering system of Fig. 8.

### DESCRIPTION OF THE PREFERRED EMBODIMENTS

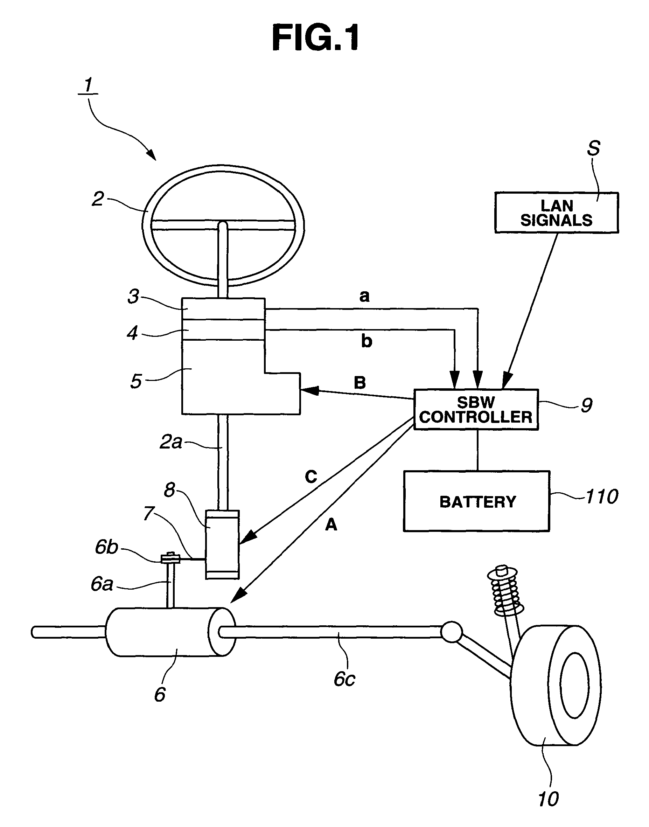

Referring now to the drawings, particularly to Fig. 1, the vehicle steering system of the embodiment is exemplified in an automotive steer-by-wire (SBW) vehicle steering system 1 configured to execute (i) an SBW operating mode for SBW control for both of steering input and output sections mechanically uncoupled from each other with an electromagnetic clutch device disengaged and (ii) a direct-coupled mode during which the steering input and output sections are mechanically coupled to each other with the electromagnetic clutch device engaged, in the presence of an SBW system failure.

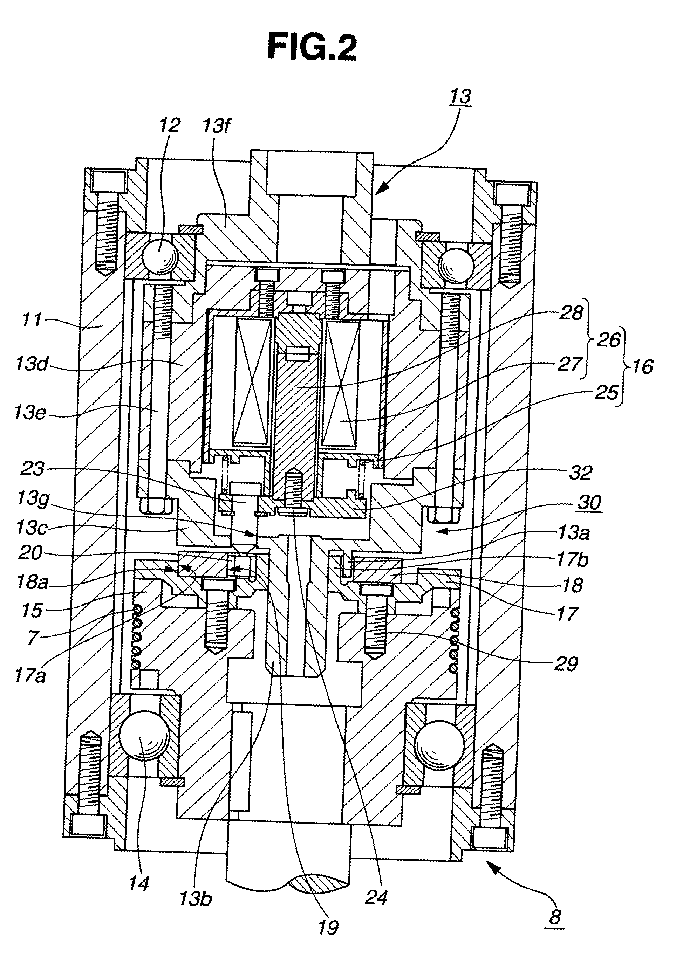

As shown in Fig. 1, vehicle steering system 1 of the embodiment is comprised of a steering wheel 2, a steering-wheel angle sensor (simply, a steering angle sensor) 3, a steering torque sensor 4, a reaction-torque-actuator equipped steering reaction force mechanism 5, a steering-actuator equipped steered-road-wheel angle converter (simply, a steered-road-wheel angle converter) 6, an electromagnetic clutch (a clutch device) 8, and a steer-by-wire (SBW) controller 9. Steering wheel 2 serving as an operating member (a steering input section) operated by the driver. Steering angle sensor 3 is provided to detect a steering-wheel movement (clockwise or counterclockwise steering movement) of steering wheel 2, exactly an amount of rotation and a rotation direction of a steering shaft 2a linked to steering wheel 2, and generates an electric information signal indicative of the steering movement, that is, a steering angle sensor signal "a". Steering torque sensor 4 is provided to detect a steering torque applied to steering wheel 2 and transferred to steering shaft 2a, and generates an electric information signal indicative of the applied steering torque, that is, a steering torque sensor signal "b". Steering reaction force mechanism 5 has a steering reaction torque actuator installed therein, so as to apply a reaction torque (or a feedback torque) to steering shaft 2a (i.e., steering wheel 2), thus reproducing a virtual steering reaction torque correlated with the actual vehicle driving state, taken in by the driver through steering wheel 2. The steering actuator of steered-road-wheel angle converter 6 produces a rotary motion whose direction and amount are both determined based on at least the steering angle sensor signal "a". Steered-road-wheel angle converter 6 serves as a steering mechanism (serving as a steering output section), which includes a rotary-to-linear motion converter, such as a rack-and-pinion steering gear mechanism, configured to convert the rotary motion produced by the steering actuator and transferred to an input shaft 6a into a linear motion of an output rod 6c, for steering road wheels (steered wheels) 10. Electromagnetic clutch 8 includes a coupling/uncoupling mechanism 30 (described later in reference to Figs. 2-3) that mechanically couples and uncouples steering shaft 2a (steering wheel 2) to and from input shaft 6a of steered-road-wheel angle converter 6. SBW controller 9 generally comprises a microcomputer. SBW controller 9 includes an input/output interface (I/O), memories (RAM, ROM), and a microprocessor or a central processing unit (CPU). The input/output interface (I/O) of SBW controller 9 receives input information from various vehicle sensors, that is, steering angle sensor signal "a" from steering angle sensor 3, steering torque sensor signal "b" from steering torque sensor 4, and also receives vehicle local-area-network (LAN) signals "S", namely, a vehicle speed signal "V", a yaw rate signal "ω", a lateral acceleration signal "G", and the like. Within SBW controller 9, the central processing unit (CPU) allows the access by the I/O interface of input informational data signals from the previously-discussed vehicle sensors. The CPU of SBW controller 9 is responsible for carrying the control program stored in memories and is capable of performing necessary arithmetic and logic operations containing a vehicle steering system control management processing (containing steered-road-wheel angle converter control achieved through the steering actuator provided in steered-road-wheel angle converter 6, steering reaction control achieved through steering reaction force mechanism 5, and uncoupling/coupling control for electromagnetic clutch 8). Computational results (arithmetic calculation results), that is, calculated output signals "A", "B", and "C" (described later) are relayed through the output interface circuitry of the SBW controller to output stages, namely the steering actuator of steered-road-wheel angle converter 6, the reaction torque actuator of steering reaction force mechanism 5, and an electromagnetic coil 27 (described later) of electromagnetic clutch 8. A component part denoted by reference sign 110 is a battery of the SBW vehicle steering system.

When steering wheel 2 is turned by the driver during a steer-by-wire (SBW) operating mode (a normal operating mode), the steering-wheel movement (clockwise or counterclockwise steering movement), in other words, the amount and direction of rotation of steering shaft 2a, is detected by steering angle sensor 3, and then steering angle sensor 3 generates steering angle sensor signal "a". SBW controller 9 outputs control command signal "A", determined based on the latest up-to-date information signal "a" from steering angle sensor 3, to the steering actuator of steered-road-wheel angle converter 6. As a result of this, the steering actuator is driven depending on the detected steering movement, and then rotary motion of the steering actuator is transferred to input shaft 6a of steered-road-wheel angle converter 6. The rotary motion transferred to input shaft 6a is converted into linear motion of output rod 6c, that is, a leftward or rightward motion of output rod 6c, and then road wheels 10 are steered by the output-rod linear motion. During the SBW operating mode, on the other hand, the steering torque, applied to steering wheel 2 (i.e., steering shaft 2a), is detected by steering torque sensor 4, and then steering torque sensor 4 generates steering torque sensor signal "b". SBW controller 9 outputs control command signal "B", determined based on the latest up-to-date information signal "b" from steering torque sensor 4, to the steering reaction torque actuator of steering reaction force mechanism 5, thereby reproducing a virtual steering reaction torque correlated with the actual vehicle driving state, taken in by the driver through steering wheel 2.

Conversely when SBW controller 9 determines that an SBW system failure and/or a failure in an automotive electrical equipment of the vehicle, such as a failure in the steering actuator or a failure in the steering reaction torque actuator, occurs and thus the SBW operating mode cannot be executed normally, that is, during a failure mode, SBW controller 9 outputs control command signal "C", corresponding to a solenoid de-energization signal (i.e., a clutch-engagement signal) to the electromagnetic coil of electromagnetic clutch 8, thus switching electromagnetic clutch 8 from a disengaged state to an engaged state. This realizes a direct-coupled mode during which the steering input section (steering wheel 2 and steering shaft 2a) and the steering output section (steered-road-wheel angle converter 6) are directly coupled to each other via the electromagnetic clutch 8 engaged.

Referring now to Fig. 2, there is shown the detailed internal structure of electromagnetic clutch 8 under the clutch disengaged state. As shown in Fig. 2, a connecting shaft 13 (serving as a clutch input shaft) is provided in the upper section of a cylindrical-hollow clutch housing 11 of electromagnetic clutch 8. Connecting shaft 13 is rotatably supported by a bearing 12. On the other hand, an output pulley 15 (serving as a clutch output shaft) is provided in the lower section of housing 11, and rotatably supported by a bearing 14. As best shown in Fig. 1, connecting shaft 13 is fixedly connected to steering shaft 2a, while output pulley 15 is fixedly connected to input shaft 6a of steered-road-wheel angle converter 6. A cable (flexible torque-transmission means) is wound on both the output pulley 15 and a pulley 6b (see Fig. 1) attached to input shaft 6a of steered-road-wheel angle converter 6. Electromagnetic clutch 8 includes the coupling/uncoupling mechanism (simply, coupling mechanism 30), which is provided between connecting shaft 13 (the clutch input shaft) and output pulley 15 (the clutch output shaft) axially opposing each other, for mechanically coupling and uncoupling connecting shaft 13 (i.e., steering shaft 2a) to and from output pulley 15 (i.e., input shaft 6a of steered-road-wheel angle converter 6), so as to permit co-rotation of output pulley 15 with connecting shaft 13 with electromagnetic clutch 8 engaged and to prevent steering torque transmission from connecting shaft 13 to output pulley 15 with electromagnetic clutch 8 disengaged.

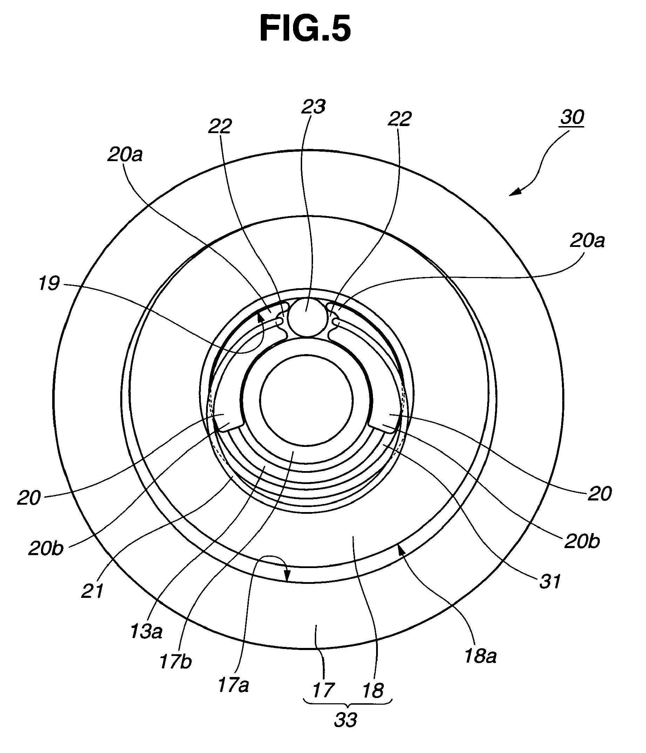

As clearly shown in Figs. 2 and 5, coupling mechanism 30 is comprised of an inner-peripheral-wall-surface defining member 17, an outer-peripheral-wall-surface defining member 18, a pair of substantially boomerang-shaped curved wedges 20, 20, a spring 21, a curved driving portion 13a (in other words, a steering-movement transmission member), and a lock pin 23 (described later). Inner-peripheral-wall-surface defining member 17 has an inner peripheral wall surface 17a defined or formed therein. Inner-peripheral-wall-surface defining member 17 is fixedly connected to the upper end face of output pulley 15. Outer-peripheral-wall-surface defining member 18 has an outer peripheral wall surface 18a defined or formed therein. Outer peripheral wall surface 18a is in rolling contact with inner peripheral wall surface 17a. Curved driving portion 13a axially extends from the bottom end of a lower axial-end member 13c of connecting shaft 13, and circumferentially curved. As shown in Fig. 2, inner-peripheral-wall-surface defining member 17 has an annular concave portion formed by shaping or pressing the inside of a disk-shaped metal plate material by way of half die forming under pressure. Inner-peripheral-wall-surface defining member 17 is secured to the upper end face of output pulley 15 by means of bolts 29. The inner peripheral wall surface 17a of the annular concave portion of the disk-shaped inner-peripheral-wall-surface defining member 17 is formed with fine (or close) ridges and troughs by way of knurling. Inner-peripheral-wall-surface defining member 17 is also formed integral with a central cylindrical hub portion 17b, axially upwardly extending from the center of the annular concave portion of the disk-shaped inner-peripheral-wall-surface defining member 17. Outer-peripheral-wall-surface defining member 18 is annular in shape. The annular outer-peripheral-wall-surface defining member 18 is loosely fitted into the annular concave portion of inner-peripheral-wall-surface defining member 17 and located in the annular space defined between inner peripheral wall surface 17a and the outer periphery of hub portion 17b. In a similar manner to inner peripheral wall surface 17a of the disk-shaped inner-peripheral-wall-surface defining member 17, the outer peripheral wall surface 18a of the annular outer-peripheral-wall-surface defining member 18 is formed with fine (or close) ridges and troughs by way of knurling. The diameter of the circumference of outer peripheral wall surface 18a is dimensioned to be slightly smaller than that of inner peripheral wall surface 17a. Thus, with outer-peripheral-wall-surface defining member 18 in rolling contact with inner-peripheral-wall-surface defining member 17, there is a slight offset between the center of the annular outer-peripheral-wall-surface defining member 18 and the center of the disk-shaped inner-peripheral-wall-surface defining member 17. As seen in Fig. 5, outer-peripheral-wall-surface defining member 18 has a central circular hole formed in its center. The inner periphery of the central circular hole of outer-peripheral-wall-surface defining member 18 forms or defines a sliding inner peripheral wall surface 19.

As discussed above, outer peripheral wall surface 18a is in rolling contact with inner peripheral wall surface 17a and there is a slight offset between the center of the annular outer-peripheral-wall-surface defining member 18 and the center of the disk-shaped inner-peripheral-wall-surface defining member 17. That is, inner-peripheral-wall-surface defining member 17 and outer-peripheral-wall-surface defining member 18 construct an eccentric rolling-element mechanism 33. As clearly shown in Fig. 5, an annular space 31 is defined between the outer periphery of hub portion 17b of inner-peripheral-wall-surface defining member 17 and sliding inner peripheral wall surface 19 of outer-peripheral-wall-surface defining member 18. As can be seen in Fig. 5, in the shown embodiment, the shape of the left-hand wedge 20 is identical to the reversed shape of the right-hand wedge 20. The previously-noted two wedges 20, 20 are movably mounted or accommodated in annular space 31 and circumferentially slightly tapered. Each of wedges 20, 20 has a relatively wide first circumferential end 20a (the basal end of wedge 20 or the thick edge of wedge 20) formed with a recessed guide groove 22, serving as a guide groove for lock pin 23 and also serving as a spring hanger for spring 21, and a relatively narrow second circumferential end 20b (the tip of wedge 20 or the thin edge of wedge 20). The 1^{st} circumferential ends 20a, 20a of wedges 20, 20 are located to circumferentially oppose each other, while the 2^{nd} circumferential ends 20b, 20b of wedges 20, 20 are located to be circumferentially spaced apart from each other. In the shown embodiment, spring 21 is a C-shaped tension spring, whose hook ends are hanged at the respective recessed guide grooves 22, 22 of 1^{st} circumferential ends 20a, 20a of wedges 20, 20, such that the spring bias of spring 21 (biasing means) forces the 1^{st} circumferential ends 20a, 20a of wedges 20, 20 to move apart from each other. The preset spring bias of spring 21 is small.

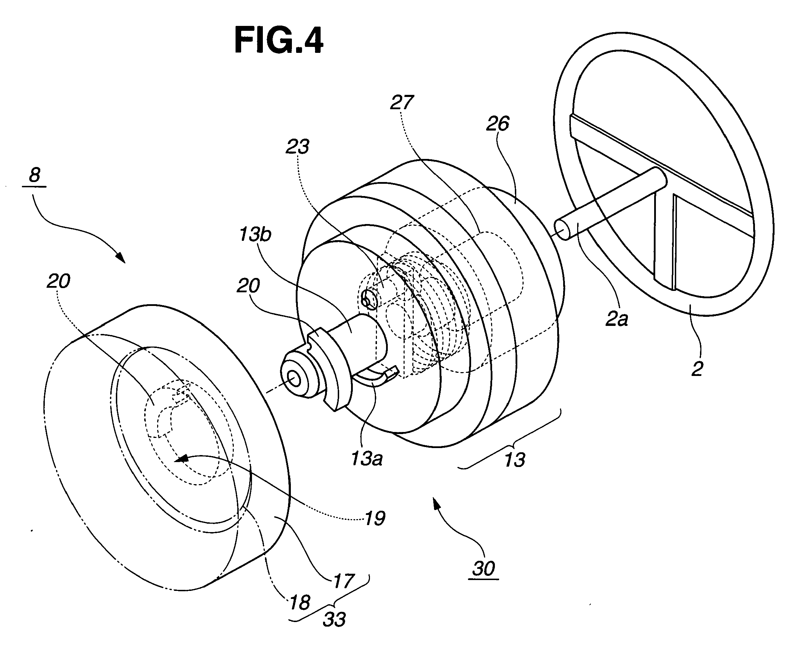

Returning to Fig. 2, the lower axial-end member 13c of connecting shaft 13, facing eccentric rolling-element mechanism 33, is integrally formed at its central portion with a centering shaft portion 13b protruding axially from the bottom end face of lower axial-end member 13c. Centering shaft portion 13b is rotatably fitted into the cylindrical hub portion 17b of inner-peripheral-wall-surface defining member 17. As best seen in Figs. 4-5, the previously-noted driving portion 13a, which axially extends from the bottom end of lower axial-end member 13c of connecting shaft 13, has a circumferentially curved shape corresponding to a partially cut-out cylinder. When assembling, the circumferentially-curved driving portion 13a is loosely fitted into annular space 31 and interleaved between the 2^{nd} circumferential ends 20b, 20b of wedges 20, 20. There is a clearance defined between a first opposing end-face pair, namely, the 2^{nd} circumferential end 20b of the left-hand wedge 20 and the left-hand circumferential end face of driving portion 13a (viewing Fig. 5), and there is a clearance defined between a second opposing end-face pair, namely, the 2^{nd} circumferential end 20b of the right-hand wedge 20 and the right-hand circumferential end face of driving portion 13a (viewing Fig. 5). As shown in Figs. 2-3, 4, and 5, lock pin 23 is installed in the lower axial-end member 13c of connecting shaft 13, such that the lower end portion of lock pin 23 downwardly advances apart from the bottom end face of lower axial-end member 13c and upwardly retreats toward the bottom end face of lower axial-end member 13c in the direction parallel to the axis of connecting shaft 13. As seen in Fig. 5, in order to be able to correctly squeeze lock pin 23 between the two opposing 1^{st} circumferential ends 20a, 20a of wedges 20, 20 by downward movement (forward movement) of lock pin 23, lock pin 23 is located at the circumferential position opposite to the circumferential midpoint of driving portion 13a with respect to the axis of hub portion 17b of inner-peripheral-wall-surface defining member 17 (i.e., the axis of centering shaft portion 13b of axial-end member 13c of connecting shaft 13). That is to say, in the shown embodiment, the circumferential distance between the shaft center of lock pin 23 and the left-hand circumferential end face of driving portion 13a is dimensioned to be identical to the circumferential distance between the shaft center of lock pin 23 and the right-hand circumferential end face of driving portion 13a (see Fig. 5).

The interrelationship between the wedge pair (20, 20) and lock pin 23 is described hereunder. As previously described in reference to the cross section shown in Fig. 5, under the assembled state of connecting shaft 13 and inner-peripheral-wall-surface defining member 17 (output pulley 15) rotatable relative to each other, driving portion 13a, which protrudes downwardly from the bottom end of lower axial-end member 13c of connecting shaft 13, is interleaved between the 2^{nd} circumferential ends 20b, 20b of wedges 20, 20 movably mounted or accommodated in annular space 31. Thus, the position of connecting shaft 13 (i.e., the position of driving portion 13a) relative to the wedge pair (20, 20) is kept substantially constant. Therefore, even when connecting shaft 13 is rotating, the relative position of the shaft center (a tip portion 23b described later) of lock pin 23, axially extending from the bottom end of lower axial-end member 13c of connecting shaft 13, with respect to the wedge pair (20, 20) can be permanently kept or positioned within the clearance space defined by the recessed guide grooves 22, 22 of 1^{st} circumferential ends 20a, 20a of wedges 20, 20, when viewed in the axial direction of connecting shaft 13.

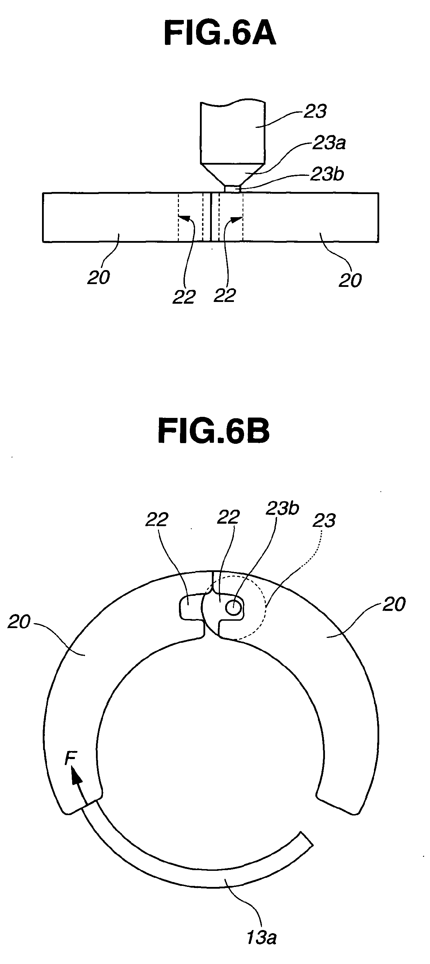

In the unlock state of lock pin 23 as shown in Figs. 2 and 6A, in which lock pin 23 is forced and retreated out of the clearance space defined by the recessed guide grooves 22, 22 of 1^{st} circumferential ends 20a, 20a of wedges 20, 20 by an attraction force (described later), driving portion 13a rotates at an idle (without a load or with a less load due to a slight friction) with respect to both of inner-peripheral-wall-surface defining member 17 and outer-peripheral-wall-surface defining member 18, while pushing wedges (20, 20), unjammed between two members 17-18, in the rotational direction of driving portion 13a (see Fig. 6B). This ensures a clutch disengaged state.

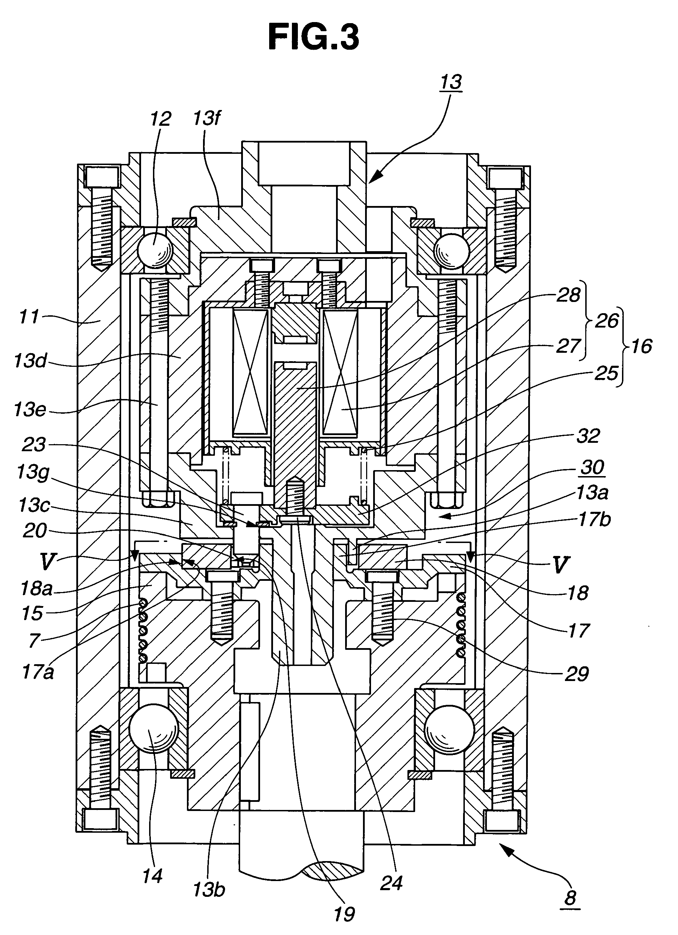

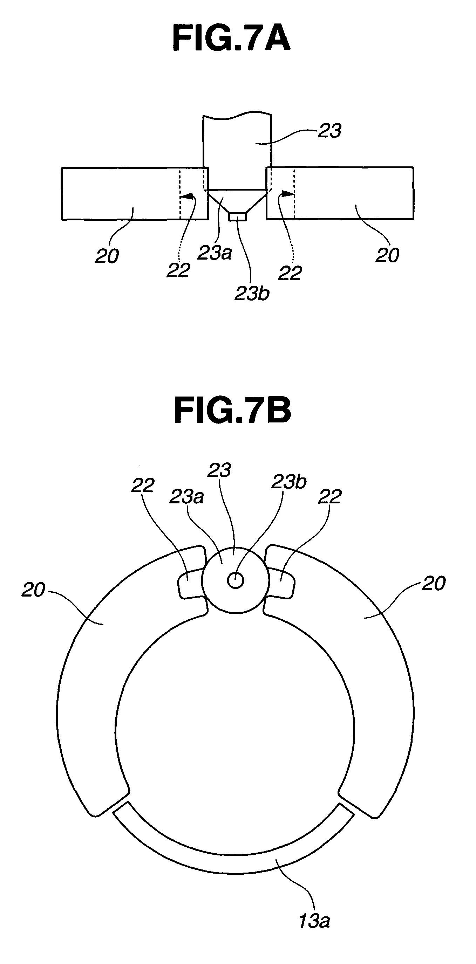

In the lock state of lock pin 23 as shown in Figs. 3 and 7A, in which lock pin 23 is squeezed between the two opposing 1^{st} circumferential ends 20a, 20a of wedges 20, 20 by a spring bias (described later), a wedging action is created by the lock pin 23 squeezed between the two opposing 1^{st} circumferential ends 20a, 20a of wedges 20, 20 (see Fig. 7B). Owing to the wedging action, in other words, owing to the wedges 20, 20 jammed between hub portion 17b of inner-peripheral-wall-surface defining member 17 and sliding inner peripheral wall surface 19 of outer-peripheral-wall-surface defining member 18 by the squeezed lock pin 23 (see Fig. 5), the wedge pair (20, 20), outer-peripheral-wall-surface defining member 18, and inner-peripheral-wall-surface defining member 17 are integrally coupled to each other and then rotate together by a driving force inputted from driving portion 13 to one of the two wedges. This ensures a clutch engaged state.

Hereinafter described in detail in reference to the longitudinal cross section of Fig. 2 is a lock-pin actuator (lock-pin driving means) used to axially move lock pin 23 such that the lower end portion of lock pin 23 downwardly advances apart from the bottom end face of lower axial-end member 13c and upwardly retreats toward the bottom end face of lower axial-end member 13c. As clearly shown in Fig. 2, connecting shaft 13 is comprised of lower axial-end member 13c formed integral with centering shaft portion 13b, a cylindrical-hollow member 13d, and an upper axial-end member 13f. These members 13c, 13d, and 13f are integrally connected to each other by fastening them together with bolts 13e. An electromagnetic solenoid mechanism 16 is accommodated in an internal space defined in the members 13c, 13d, and 13f, constructing connecting shaft 13. Solenoid mechanism 16 is comprised of an electromagnet 26 and a return spring 25 (biasing means). Electromagnet 26 is comprised of an electromagnetic coil 27 and a movable armature core (a round-bar-shaped movable iron part) 28 movably installed in coil 27. A lock-pin retainer disk 32 is secured to the bottom end of movable core 28 by means of a screw 24, such that the upper face of retainer disk 32 is fitted onto the bottom end face of movable core 28, and that the center of retainer disk 32 is aligned with the movable-core axis parallel to the axis of connecting shaft 13. Retainer disk 32 has an eccentric axial bore, whose center is offset from the center of retainer disk 32 and which is bored in the direction parallel to the axis of connecting shaft 13. Lock pin 23 is fitted into the axial bore of retainer disk 32 and secured to retainer disk 32 by mean of a retaining ring (not numbered). Under the assembled state, the lower end portion of lock pin 23 is inserted into an axial bore 13g, which is formed in lower axial-end member 13c and whose center is offset from the axis of centering shaft portion 13b. In order to correctly insert lock pin 23 into axial bore 13g of lower axial-end member 13c, the axial bore of retainer disk 32 and the axial bore 13g of lower axial-end member 13c are aligned with each other. Return spring 25 is disposed between electromagnet 26 and retainer disk 32 under preload.

For the purpose of certainly smoothly squeezing lock pin 23 between the two opposing 1^{st} circumferential ends 20a, 20a of wedges 20, 20, as shown in Figs. 6A and 7A, the lower end portion of lock pin 23 is formed with a frusto-conical tapered portion 23a and a small-diameter circular-cylinder tip portion 23b formed integral with the lowermost end of tapered portion 23a. Additionally, as best seen in Fig. 6B, the width dimension of each of recessed guide grooves 22, 22, configured to guide the squeezing motion of lock pin 23 between the two opposing 1^{st} circumferential ends 20a, 20a of wedges 20, 20, is dimensioned to be greater than the outside diameter of circular-cylinder tip portion 23b. As mentioned previously, recessed guide groove 22 also serves as a spring hanger for spring 21.

Hereinafter described in detail is the operation of the vehicle steering system of the embodiment.

During the SBW operating mode (during the normal operating mode), coil 27 of electromagnet 26 is energized so that electromagnet 26 attracts movable core 28 toward a stand-by position. Thus, lock pin 23 and retainer disk 32 as well as core 28 are forced upwards against the spring bias of return spring 25 and then kept at a retreated position. As a result, coupling mechanism 30 is conditioned in the unlock state shown in Figs. 6A-6B. On the other hand, the two wedges 20, 20 are forced apart from each other by a small spring bias of spring 21, but their 1^{st} circumferential ends 20a, 20a are kept in close proximity to each other via driving portion 13a interleaved between 2^{nd} circumferential ends 20b, 20b of wedges 20, 20. Under this condition (i.e., in the unlock state of coupling mechanism 30), when steering wheel 2 is turned by the driver, the steering movement is transferred from steering shaft 2a to connecting shaft 13. Driving portion 13a of connecting shaft 13 circumferentially pushes or forces one of the two wedges within annular space 31 in the rotational direction of driving portion 13a, for example, in the clockwise direction (see a driving force F transmitted from driving portion 13a to the left-hand wedge 20 in Fig. 6B). Therefore, in the unlock state, the wedge pair (20, 20) circumferentially rotates at an idle (without a load or with a less load due to a slight friction) within annular space 31, while being pushed by driving portion 13a. Thus, the wedge pair (20, 20) merely slides within annular space 31 with no wedging action between inner-peripheral-wall-surface defining member 17 and outer-peripheral-wall-surface defining member 18, while being kept in sliding-contact with both of the outer periphery of hub portion 17b and the sliding inner peripheral wall surface 19 by the slight spring bias of spring 21. During the circumferential sliding motion of the wedge pair (20, 20) with no wedging action, that is, during idling of driving portion 13a, regarding outer-peripheral-wall-surface defining member 18, whose geometric center is slightly eccentric to the geometric center of inner-peripheral-wall-surface defining member 17 and whose outer peripheral wall surface 18a (one of contacting surfaces) is in rolling contact with inner peripheral wall surface 17a (the other of contacting surfaces), the rolling-contact portion (i.e., the point of rolling contact) of outer peripheral wall surface 18a circumferentially displaces clockwise (viewing Fig. 6B). Accordingly, outer-peripheral-wall-surface defining member 18 circumferentially displaces with respect to inner-peripheral-wall-surface defining member 17 by the difference between the circumference of inner peripheral wall surface 17a and the circumference of outer peripheral wall surface 18a in the opposite direction to the rotational direction of driving portion 13a (that is, the counterclockwise direction in Fig. 6B), for each revolution of driving portion 13a. At this time, the two wedges 20, 20 circumferentially rotate while being permanently forced apart from each other by the spring bias of spring 21 and thus kept in sliding-contact with both of the outer periphery of hub portion 17b and the sliding inner peripheral wall surface 19 by the spring bias. Therefore, there is no rattle (no play) between two members 17-18 with the lightly spring-biased wedges, thus avoiding the occurrence of rattling noise. In this manner, during the unlock state, rotary motion of driving portion 13a causes the wedge pair (20, 20) to merely rotate and slide within annular space 31, and then outer-peripheral-wall-surface defining member 18 rolls on the inner peripheral wall surface 17a, but the rotary motion (input rotation) of driving portion 13a is not transferred to inner-peripheral-wall-surface defining member 17. That is, driving portion 13a runs free together with the wedge pair (20, 20) within annular space 31 in either one of the two opposite rotational directions, based on the direction of steering torque applied to steering wheel 2 by the driver, but merely rotates at an idle during the unlock state of coupling mechanism 30. Thus, there is no transmission of rotary motion (in other words, no steering torque transmission) from connecting shaft 13 via driving portion 13a and wedges 20, 20 to output pulley 15.

As set forth above, during the unlock state, there is no transmission of rotary motion of connecting shaft 13 to output pulley 15. That is, electromagnetic clutch 8 is kept in its disengaged state in which steering wheel 2 and steered-road-wheel angle converter 6 are mechanically uncoupled from each other. Under this condition (i.e., under the clutch disengaged state), when steering wheel 2 is turned by the driver, SBW controller 9 outputs control command signal "A", determined based on the latest up-to-date information signal "a" from steering angle sensor 3, to the steering actuator of steered-road-wheel angle converter 6. As a result, the steering actuator is driven depending on the detected steering movement, and then rotary motion of the steering actuator is transferred to input shaft 6a of steered-road-wheel angle converter 6. The rotary motion transferred to input shaft 6a is converted into linear motion of output rod 6c, and then road wheels 10 are steered by the output-rod linear motion.

Conversely when SBW controller 9 determines that an SBW system failure and/or a failure in an automotive electrical equipment of the vehicle, such as a failure in the steering actuator or a failure in the steering reaction torque actuator, occurs and thus the SBW operating mode cannot be executed normally, that is, during a failure mode, SBW controller 9 outputs control command signal "C", corresponding to a solenoid de-energization signal (an OFF signal) to the electromagnetic coil 27 of electromagnetic clutch 8. That is, coil 27 of electromagnet 26 is de-energized and thus there is no attraction force acting on movable core 28. As a result, by the spring bias of return spring 25 acting on retainer disk 32, lock pin 23 axially downwardly moves together with disk 32 as well as core 28, and then lock pin 23 has been finally squeezed between the two opposing 1^{st} circumferential ends 20a, 20a of wedges 20, 20 (see Fig. 3). The process of transition from the unlock state to the lock state of lock pin 23, is hereunder described in detail.

As previously described, even when connecting shaft 13 is rotating, the relative position of the shaft center (in particular, tip portion 23b) of lock pin 23, projected from the bottom end of lower axial-end member 13c of connecting shaft 13, with respect to the wedge pair (20, 20) is permanently kept or positioned within the clearance space defined by the recessed guide grooves 22, 22 of 1^{st} circumferential ends 20a, 20a of wedges 20, 20, when viewed in the axial direction of connecting shaft 13 (see Figs. 5, 6B and 7B). For instance when driving portion 13a forces the wedge pair (20, 20) clockwise during the initial stage of squeezing motion of lock pin 23, the small-diameter tip portion 23b of lock pin 23 tends to project into the recessed guide groove 22 of the right-hand wedge 20 (see Fig. 6B). Thereafter, as lock pin 23 shifts from the partially squeezed state to the fully squeezed state, the two wedges 20, 20 move apart from each other. With lock pin 23 fully squeezed, the wedges 20, 20 are jammed between hub portion 17b of inner-peripheral-wall-surface defining member 17 and sliding inner peripheral wall surface 19 of outer-peripheral-wall-surface defining member 18 (see Figs. 3, 5 and 7B) so as to create a wedging action. During the transient state from the partially squeezed state to the fully squeezed state, lock pin 23 can be easily momentarily squeezed between the two opposing 1^{st} circumferential ends 20a, 20a of wedges 20, 20. This is because lock pin 23 can be smoothly guided by the recessed guide grooves 22, 22 via the frusto-conical surface of tapered portion 23a of lock pin 23, even when the driving force of driving portion 13a pushes the wedge pair (20, 20) and the wedge pair is rotating and sliding within annular space 31. Owing to the wedging action (or the wedging effect), the wedge pair (20, 20), outer-peripheral-wall-surface defining member 18, and inner-peripheral-wall-surface defining member 17 are integrally coupled to each other and thus kept in their locked states in which there is no relative rotation among them. Under the locked states of these members 17, 18, 20, and 20, driving portion 13a drives inner-peripheral-wall-surface defining member 17 via the jammed wedges (20, 20). As a result, connecting shaft 13 and output pulley 15, integrally coupled to each other, rotate together. In this manner, by virtue of smooth coupling action of coupling mechanism 30 incorporated in the vehicle steering system of the embodiment, electromagnetic clutch 8 can be momentarily shifted to its engaged state, that is, the direct-coupled mode in which steering wheel 2 and steered-road-wheel angle converter 6 are mechanically coupled to each other via clutch 8 engaged.

During the direct-coupled mode (during the engaged state of electromagnetic clutch 8), SBW controller 9 inhibits the output of control command signal "A", determined based on the latest up-to-date information signal "a" from steering angle sensor 3, to the steering actuator of steered-road-wheel angle converter 6. During the direct-coupled mode, steering torque applied to steering wheel 2 by the driver is transferred via electromagnetic clutch 8 directly to input shaft 6a of steered-road-wheel angle converter 6 for steering the road wheels (steered wheels 10) even in the presence of an SBW system failure and/or a failure in an automotive electrical equipment of the vehicle.

As will be appreciated from the above, according to the vehicle steering system of the embodiment, during the SBW operating mode (during the normal operating mode), the steering movement (i.e., the amount and direction of rotation of steering shaft 2a) is detected. The steering actuator of steered-road-wheel angle converter 6 produces a rotary motion whose direction and amount are both determined based on the detected steering movement. Steered-road-wheel angle converter 6 converts the rotary motion produced by the steering actuator and transferred to its input shaft 6a into linear motion of its output rod 6c, for steering road wheels (steered wheels) 10 by the linear motion of output rod 6c. Conversely during a failure mode (in the presence of an SBW system failure and/or a failure in an automotive electrical equipment of the vehicle), the vehicle steering system is configured such that lock pin 23 (included in the clutch device) is squeezed between the two opposing 1^{st} circumferential ends 20a, 20a of wedges 20, 20 by forward movement of lock pin 23. The wedging action of the wedge pair (20, 20) ensures a lock state in which wedges 20, 20 are kept jammed between inner-peripheral-wall-surface defining member 17 and outer-peripheral-wall-surface defining member 18 to integrally couple two members 17-18 with each other with the jammed wedge pair (20, 20), and thus there is no relative rotation between two members 17-18. In the lock state, driving portion 13a drives inner-peripheral-wall-surface defining member 17, and then connecting shaft 13 of the clutch device (i.e., the clutch input shaft of electromagnetic clutch 8) and output pulley 15 (i.e., the clutch output shaft of electromagnetic clutch 8), coupled to each other, rotate together. That is, the wedge pair (20, 20) jammed between two members 17-18 produces the clutch engaged state. In this manner, by virtue of smooth squeezing motion of lock pin 23 between the two opposing 1^{st} circumferential ends 20a, 20a of wedges 20, 20, during a transition from the SBW operating mode to the failure mode, steering shaft 2 and steered-road-wheel angle converter 6 can be mechanically momentarily coupled to each other to ensure manual steering for steered road wheels 10. In other words, during the transition from the SBW operating mode to the failure mode, it is possible to momentarily switch the clutch device (electromagnetic clutch 8) to its engaged state by way of smooth squeezing motion of lock pin 23 between the two opposing 1^{st} circumferential wedge ends 20a, 20a. Additionally, rolling contact between inner-peripheral-wall-surface defining member 17 and outer-peripheral-wall-surface defining member 18, enables large steering torque transmission.

In addition to the above, according to the vehicle steering system of the embodiment, in an electric-power supplied state for coil 27 of electromagnet 26 in which coil 27 is energized during the SBW operating mode, electromagnet 26 attracts lock pin 23 (exactly, armature core 28) toward its stand-by position against the spring bias of return spring 25, and whereby the clutch device (electromagnetic clutch 8) becomes kept at its disengaged state. Conversely in an electric-power unsupplied state for coil 27 of electromagnet 26 in which coil 27 is de-energized during the failure mode, lock pin 23 axially advances and squeezes between the two opposing 1^{st} circumferential ends 20a, 20a of wedges 20, 20, and whereby the clutch device becomes kept at its engaged state. That is, even in the electric-power unsupplied state, the operating mode of the vehicle steering system can be reliably kept at its direct-coupled mode in which steering shaft 2 and steered-road-wheel angle converter 6 are mechanically coupled to each other for ensuring manual steering for steered road wheels 10.

Furthermore, according to the vehicle steering system of the embodiment, the inner peripheral wall surface 17a of inner-peripheral-wall-surface defining member 17 and the outer peripheral wall surface 18a of outer-peripheral-wall-surface defining member 18 are both formed with fine (or close) ridges and troughs, for example by way of knurling. When outer-peripheral-wall-surface defining member 18, whose outer peripheral wall surface 18a is in rolling contact with the inner peripheral wall surface 17a, rolls on the inner peripheral wall surface 17a of inner-peripheral-wall-surface defining member 17, there is a less slippage at the rolling-contact portion and thus the relative velocity of the two contacting surfaces at the point of rolling contact is approximately zero. This is because the coefficient (the ratio) of the frictional force between the inner peripheral wall surface 17a and the outer peripheral wall surface 18a in rolling contact with each other is high due to the fine ridges and troughs formed on the inner and outer peripheral wall surfaces 17a-18a, for example by way of knurling. Therefore, it is possible to effectively suppress an undesired slippage between connecting shaft 13 and output pulley 15 under the clutch engaged state. Alternatively, inner-peripheral-wall-surface defining member 17 may have an internal toothed gear formed on the inner periphery, whereas outer-peripheral-wall-surface defining member 18 may have an external toothed gear formed on the outer periphery and in meshed-engagement with the internal toothed gear of member 17. However, meshed-engagement between the internal and external toothed gears requires high-precision gear shaping, to prevent an undesirably great drag torque from being created when internal and external teeth in mesh are de-meshing from each other. On the contrary, rolling contact between inner-peripheral-wall-surface defining member 17 and outer-peripheral-wall-surface defining member 18 does not require high-precision machining. Thus, rolling contact between two members 17-18 is superior to meshed-engagement between two members 17-18, with respect to reduced manufacturing costs. Additionally, owing to meshing/de-meshing action of the internal and external toothed gears of two members 17-18, requiring high-precision gear shaping, in other words, to avoid an undesirable interference between the addendum circles of the internal and external toothed gears at a circumferential position opposite to the deeply-meshed-engagement portion (i.e., the completely-engaged portion), the eccentricity (the eccentric distance) between the geometric centers of the internal and external toothed gears must be limited to a value greater than the tooth depth. In contrast, the lower limit of the eccentricity (the eccentric distance) between the geometric centers of inner-peripheral-wall-surface defining member 17 and outer-peripheral-wall-surface defining member 18 in rolling contact (which never requires high-precision machining) can be set to a value less than that of meshed-engagement. Setting the eccentricity (the eccentric distance) between the geometric centers of two members 17-18 to a smaller value enables a smaller angle of wedge 20, (exactly, a smaller angle between inside and outside curved and tapered faces of each wedge 20), in other words, a greater wedge effect, thus enabling large steering torque transmission. Also, setting the eccentricity (the eccentric distance) between the geometric centers of two members 17-18 in rolling contact to a smaller value, in other words, a comparatively wide range of eccentricity settings, means an increased design flexibility.

In the shown embodiment, the side of the clutch output shaft (i.e., output pulley 15 constructing a part of electromagnetic clutch 8) has inner-peripheral-wall-surface defining member 17, which is fixedly connected to the clutch output shaft (output pulley 15). On the other hand, the side of the clutch input shaft (i.e., connecting shaft 13 constructing a part of electromagnetic clutch 8) has lock pin 23 and driving portion 13a. Driving portion 13a is formed in such a manner as to axially extend from the bottom end of the clutch input shaft (connecting shaft 13) and functions, in a broader sense, as a steering-movement transmission member via which driver-applied steering movement (steering torque) can be transmitted from the steering input section to the steering output section with the clutch device engaged (in other words, with the jammed wedges). In the shown embodiment, steering-movement transmission member 13a functions as a driving member, which drives the inner-peripheral-wall-surface defining member via the jammed wedges during the failure mode. In lieu thereof, the clutch device may be configured such that the side of the clutch input shaft (connecting shaft 13) has inner-peripheral-wall-surface defining member 17, whereas the side of the clutch output shaft (output pulley 15) has lock pin 23 and steering-movement transmission member 13a via which driver-applied steering movement (steering torque) can be transmitted from the steering input section to the steering output section with the clutch device engaged. In this case, steering-movement transmission member 13a functions as a driven member, which is driven by the inner-peripheral-wall-surface defining member via the jammed wedges during the failure mode.

In the shown embodiment, when electromagnetic coil 27 is energized, the clutch device (electromagnetic clutch 8) is kept disengaged. Conversely when electromagnetic coil 27 is de-energized, the clutch device is kept engaged. In lieu thereof, the clutch device may be configured such that the clutch device is kept engaged with coil 27 energized, and kept disengaged with coil 27 de-energized.

In the shown embodiment, an electromagnetically-operated clutch (electromagnetic clutch 8) is utilized as a clutch device. It will be appreciated that the invention is not limited to such an electromagnetically-operated clutch, but that another type of clutch, for example a hydraulically-operated clutch or a pneumatically-operated clutch, may be utilized.

In the shown embodiment, a plurality of fine ridges and troughs are formed on both of inner and outer peripheral wall surfaces 17a-18a. Such a plurality of fine ridges and troughs may be formed on either one of inner and outer peripheral wall surfaces 17a-18a in rolling contact.

In the shown embodiment, control command signal "A" for the steering actuator of steered-road-wheel angle converter 6 is determined based on the latest up-to-date information signal "a" from steering angle sensor 3. Alternatively, control command signal "A" for the steering actuator of steered-road-wheel angle converter 6 may be determined based on the latest up-to-date information data signal "V" from the vehicle speed sensor as well as the latest up-to-date information data signal "a" from steering angle sensor 3.

The entire contents of Japanese Patent Application No. 2006-346883 (filed December 25, 2006) are incorporated herein by reference.

While the foregoing is a description of the preferred embodiments carried out the invention, it will be understood that the invention is not limited to the particular embodiments shown and described herein, but that various changes and modifications may be made without departing from the scope or spirit of this invention as defined by the following claims.

## Claims

1. A vehicle steering system configured to execute a steer-by-wire (SBW) operating mode for SBW control and to execute a direct-coupled mode for failsafe, comprising:
a clutch device (8) configured to mechanically couple and uncouple an operating member (2) to and from an input shaft (6a) of a steering mechanism (6); the clutch device (8) comprising:
(a) a first member (17) fixed to a first end face of two opposing end faces of a clutch input shaft (13) linked to the operating member (2) and a clutch output shaft (15) linked to the input shaft (6a) of the steering mechanism (6), the first member (17) defining a cylindrical inner peripheral wall surface (17a);
(b) a second member (18) defining a cylindrical outer peripheral wall surface (18a) in rolling contact with the inner peripheral wall surface (17a);
(c) a pair of spring-loaded wedges (20, 20) movably mounted in an annular space (31) defined between a hub portion (17b) formed integral with the first member (17) and a central circular hole (19) formed in the second member (18), each of the wedges (20, 20) having a first end (20a) and a second end (20b), the first ends (20a, 20a) of the wedges (20, 20) being located to circumferentially oppose each other, while the second ends (20b, 20b) of the wedges (20, 20) being located to circumferentially spaced apart from each other;
(d) a steering-movement transmission member (13a) provided on a second end face of the two opposing end faces of the clutch input shaft and the clutch output shaft, and interleaved between the second wedge ends (20b, 20b) to keep the first wedge ends (20a, 20a) in close proximity to each other via the steering-movement transmission member (13a); and
(e) a lock pin (23) configured to squeeze into and retreat out of a clearance space defined between the two opposing first wedge ends (20a, 20a) to ensure a lock state in which the clutch device (8) is kept in an engaged state by a wedging action of the wedges (20, 20) jammed between the first and second members (17, 18) and an unlock state in which the clutch device (8) is kept in a disengaged state with the wedges (20, 20) unjammed between the first and second members (17, 18).

2. A vehicle steering system comprising:
a sensor (3) provided to detect at least a steering movement of an operating member (2);
a steering mechanism (6) comprising:
(a) a steering actuator configured to produce a rotary motion whose direction and amount are determined based on the detected steering movement; and
(b) a motion converter configured to convert the rotary motion produced by the steering actuator and transferred to an input shaft (6a) of the steering mechanism (6) into a linear motion of an output shaft (6c) of the steering mechanism (6) for steering road wheels (10); and
a clutch device (8) configured to mechanically couple and uncouple the operating member (2) to and from the input shaft (6a) of the steering mechanism (6); the clutch device (8) comprising:
(a) a first member (17) fixed to a first end face of two opposing end faces of a clutch input shaft (13) linked to the operating member (2) and a clutch output shaft (15) linked to the input shaft (6a) of the steering mechanism (6), the first member defining an inner peripheral wall surface (17a);
(b) a second member (18) defining an outer peripheral wall surface (18a) in rolling contact with the inner peripheral wall surface (17a), a circumference of the outer peripheral wall surface (18a) having a diameter less than a diameter of a circumference of the inner peripheral wall surface (17a);
(c) a pair of wedges (20, 20) movably mounted in an annular space (31) defined between a hub portion (17b) formed integral with the first member (17) and a central circular hole (19) formed in the second member (18), each of the wedges (20, 20) having a first end (20a) and a second end (20b), the first ends (20a, 20a) of the wedges (20, 20) being located to circumferentially oppose each other, while the second ends (20b, 20b) of the wedges (20, 20) being located to circumferentially spaced apart from each other;
(d) a spring (21) configured to force the first wedge ends (20a, 20a) to move apart from each other;
(e) a steering-movement transmission member (13a) provided on a second end face of the two opposing end faces of the clutch input shaft and the clutch output shaft, and interleaved between the second wedge ends (20b, 20b) within the annular space (31) to keep the first wedge ends (20a, 20a) in close proximity to each other via the steering-movement transmission member (13a); and
(f) a lock pin (23) configured to move apart from the second end face for squeezing the lock pin (23) between the two opposing first wedge ends (20a, 20a) and to move toward the second end face for retreating the lock pin (23) out of a clearance space defined between the two opposing first wedge ends (20a, 20a),
wherein, under an unlock state in which the lock pin (23) retreats out of the clearance space defined between the two opposing first wedge ends (20a, 20a), the clutch device (8) is kept in a disengaged state in which the wedges (20, 20) are permitted to freely slide within the annular space (31) without wedging action between the first and second members (17, 18) to prevent steering torque transmission via the steering-movement transmission member (13a) and the wedges (20, 20), and
wherein, under a lock state in which the lock pin (23) squeezes between the two opposing first wedge ends (20a, 20a), the clutch device (8) is kept in an engaged state in which the first and second members (17, 18) are coupled to each other by a wedging action of the wedges (20, 20) jammed between the first and second members (17, 18) to permit steering torque transmission via the steering-movement transmission member (13a) and the wedges (20, 20).

3. The vehicle steering system as claimed in claim 2, wherein:
the clutch device (8) comprises the first member (17) fixed to an upper end face of the clutch output shaft (15) linked to the input shaft (6a) of the steering mechanism (6);
the steering-movement transmission member comprises a driving member (13a) downwardly protruding from a bottom end face of the clutch input shaft (13) linked to the operating member (2) and facing the upper end face of the clutch output shaft (15); and
the lock pin (23) configured to downwardly move apart from the bottom end face for squeezing the lock pin (23) between the two opposing first wedge ends (20a, 20a) and to upwardly move toward the bottom end face for retreating the lock pin (23) out of the clearance space defined between the two opposing first wedge ends (20a, 20a),
wherein, under the unlock state in which the lock pin (23) retreats out of the clearance space defined between the two opposing first wedge ends (20a, 20a), the clutch device (8) is kept in the disengaged state in which the driving member (13a) is permitted to run at an idle with respect to both of the first and second members (17, 18), while pushing the wedges (20, 20) unjammed between the first and second members (17, 18), and
wherein, under the lock state in which the lock pin (23) squeezes between the two opposing first wedge ends (20a, 20a), the clutch device (8) is kept in the engaged state in which the driving member (13a) is permitted to drive the first and second members (17, 18) coupled to each other by the wedging action of the wedges (20, 20) jammed between the first and second members (17, 18), while pushing the jammed wedges (20, 20).

4. The vehicle steering system as claimed in any one of preceding claims 1 to 3, further comprising:
a return spring (25) configured to force the lock pin (23) toward the clearance space defined between the two opposing first wedge ends (20a, 20a); and
an electromagnetic solenoid mechanism (16) having an electromagnet (26) configured to attract the lock pin (23) toward a stand-by position against a spring bias of the return spring (25).

5. The vehicle steering system as claimed in any one of preceding claims 1 to 4, wherein:
a plurality of ridges and troughs are formed on at least one of the inner and outer peripheral wall surfaces (17a, 18a).

6. The vehicle steering system as claimed in any one of preceding claims 1 to 5, wherein:
the lock pin (23) is formed at a lower end portion with a frusto-conical tapered portion (23a) and a circular-cylinder tip portion (23b) formed integral with the frusto-conical tapered portion (23a); and
the two opposing first wedge ends (20a, 20a) have respective guide grooves (22, 22) that define the clearance space within which the tip portion (23b) of the lock pin (23) is positioned.
